# FASCICULE DE BREVET EUROPEEN

(11) **EP 2 620 370 B1**
(45) Date de publication et mention de la délivrance du brevet: **18.05.2016**
(21) Numéro de dépôt: 13152221.1
(22) Date de dépôt: 22.01.2013
(51) Int. Cl.: B64D 41/00, H02J 9/06, H02J 1/00, H02J 4/00

(54) **Ensemble de génération électrique de secours pour un aéronef, aéronef et procédé associé**
Notstromerzeugungsaggregat für ein Luftfahrzeug, Luftfahrzeug und entsprechendes Verfahren
Backup electrical power generator for an aircraft, aircraft and related method

(30) Priorité: 25.01.2012 FR 1200209
(43) Date de publication de la demande: 31.07.2013
(73) Titulaire: Dassault Aviation, 75008 Paris (FR)
(72) Inventeur: Loison, Renaud, 75010 PARIS (FR); Savin, Olivier, 92150 SURESNES (FR)
(74) Mandataire: Blot, Philippe Robert Emile

(56) Documents cités:
- US-A- 6 011 324
- US-A1- 2002 006 536
- US-A1- 2004 247 961
- US-A1- 2008 210 812
- US-B1- 6 551 731

## Description

La présente invention concerne un ensemble de génération électrique de secours pour un aéronef selon le préambule de la revendication 1.

Un tel ensemble est destiné à constituer une source de puissance électrique de secours, lorsque les différents systèmes de production d'énergie électrique sur un aéronef sont défectueux.

La puissance électrique est destinée à alimenter les instruments essentiels de pilotage et de commande de l'aéronef pour permettre au pilote de ramener l'aéronef en sécurité sur le sol.

Pour produire une puissance électrique de secours sur un aéronef, il est connu d'utiliser des turbines déployables à partir de la carlingue désignées par le terme anglais « Ram Air Turbine » ou « RAT ».

Un tel système, toujours constitué d'une hélice entrainant un alternateur, est communément déployable à partir d'une soute et est entrainé par la vitesse de déplacement de l'aéronef par rapport à la masse d'air (principe similaire à une éolienne).

Pour des raisons évidentes de trainée avion et de vibration, ce système n'est jamais testé au cours du vol et doit donc etre considéré en analyse de fiabilité comme une fonction réalisable mais en panne dormante, c'est-à-dire que la qualité de son fonctionnement est inconnue avant son déploiement et son activation, mais supposé satisfaisante par une maintenance périodique spécifique (donc coûteuse).

En plus de la notion de panne dormante, le système en lui-même possède trois inconvénients majeurs. Le premier concerne le temps d'activation de la génération électrique secours. En effet, le système possède un temps de déploiement, puis un temps de mise en rotation de l'hélice puis un temps de disponibilité de l'énergie électrique produite. Ce temps est de plusieurs secondes ce qui nécessite d'avoir installé des batteries pour alimenter convenablement la plateforme avion en attendant que le système RAT soit opérationnel. La prise en compte de ces batteries alourdit l'aéronef et donc par conséquent augmente la consommation générale de carburant.

Le deuxième concerne le lien entre la vitesse avion et la puissance disponible du système RAT. Le système fonctionnant sur le principe d'une éolienne, plus la vitesse relative entre l'hélice et la masse d'air est importante et plus la puissance électrique disponible (couple) sera importante. Le problème se pose dans les phases d'approche et d'atterrissage où la vitesse relative est moins importante que dans les phases de plané vers la rejointe d'un aéroport, il en résulte une perte de puissance disponible en phase finale nécessitant l'utilisation d'une source complémentaire (usuellement des batteries).

Le troisième concerne l'installation d'un tel système dans un aéronef qui engendre en plus des contraintes d'encombrement structurel (trappe + actionneur), des contraintes sur le dimensionnement de la structure notamment en raison du niveau vibratoire élevé qu'entraine l'utilisation d'un système éolien, d'où finalement une augmentation en masse globale de l'aéronef

Pour pallier tous ces problèmes, WO 2006/094743 décrit un ensemble de génération électrique de secours du type précité. Un tel ensemble comporte une pile à combustible, qui est apte à engendrer de la puissance électrique par une réaction d'oxydo-réduction entre de l'hydrogène et de l'oxygène. Des cartouches de gaz sont donc embarquées dans l'aéronef pour alimenter la pile. En cas d'urgence, les cartouches sont raccordées à la pile à combustible qui est activée pour produire de l'énergie électrique.

Un tel ensemble peut présenter un niveau de fiabilité égal ou supérieur à un système de secours de type RAT. Toutefois, il ne donne pas entière satisfaction.

La pile à combustible étant utilisée uniquement en cas d'urgence, elle peut présenter un temps de mise en service élevé, notamment pour atteindre une température satisfaisante de fonctionnement. Dans certains cas, la pile est susceptible de ne pas fonctionner du tout.

Pour résoudre ce problème, il est en théorie possible de faire fonctionner la pile en continu. Cependant, un tel fonctionnement nécessiterait d'embarquer une quantité importante de gaz d'alimentation de la pile dans l'aéronef. Des infrastructures spéciales seraient donc à mettre en place au sol pour permettre le rechargement périodique des compartiments contenant les gaz alimentant la pile, indépendamment du carburant chargé dans l'aéronef.

US 6 011 324, US 6 551 731, US 2002/006536, et US 2004/247961 décrivent des ensembles de génération électrique de secours pour des applications diverses, comprenant chacun un générateur électrique de secours pouvant être placé dans une configuration de veille.

Un but de l'invention est donc d'obtenir un ensemble de génération électrique de secours sur un aéronef qui soit très sûr, tout en présentant une maintenance minimale et des conditions d'opération simples.

A cet effet, l'invention a pour objet un ensemble selon la revendication 1.

L'ensemble selon l'invention peut comprendre l'une ou plusieurs des caractéristiques des revendications 2 à 6, ou l'une des caractéristiques suivantes, prise(s) isolément ou suivant toutes combinaisons techniquement possibles :
- la première source comporte un réservoir de fluide à électrolyser, l'électrolyseur étant apte à électrolyser le fluide provenant du réservoir pour produire un combustible réducteur et un combustible oxydant destinés à alimenter la pile à combustible ;
- le réservoir de fluide à électrolyser contient de l'eau, l'électrolyseur étant apte à électrolyser l'eau provenant du réservoir pour produire de l'oxygène et de l'hydrogène destinés à alimenter la pile à combustible ;
- la deuxième source comporte au moins un réservoir de combustible gazeux d'alimentation de la pile à combustible.

L'invention a également pour objet un aéronef selon l'une des revendications 7 ou 8.

L'invention a également pour objet un procédé de génération électrique dans un aéronef selon la revendication 9 ou 10.

L'invention sera mieux comprise à la lecture de la description qui va suivre, donnée uniquement à titre d'exemple, et faite en se référant aux dessins annexés, sur lesquels :
- la Figure 1 est un schéma synoptique fonctionnel d'un premier aéronef selon l'invention, muni d'un ensemble de génération électrique de secours comportant une pile à combustible, la pile étant dans une configuration intermédiaire de veille ;

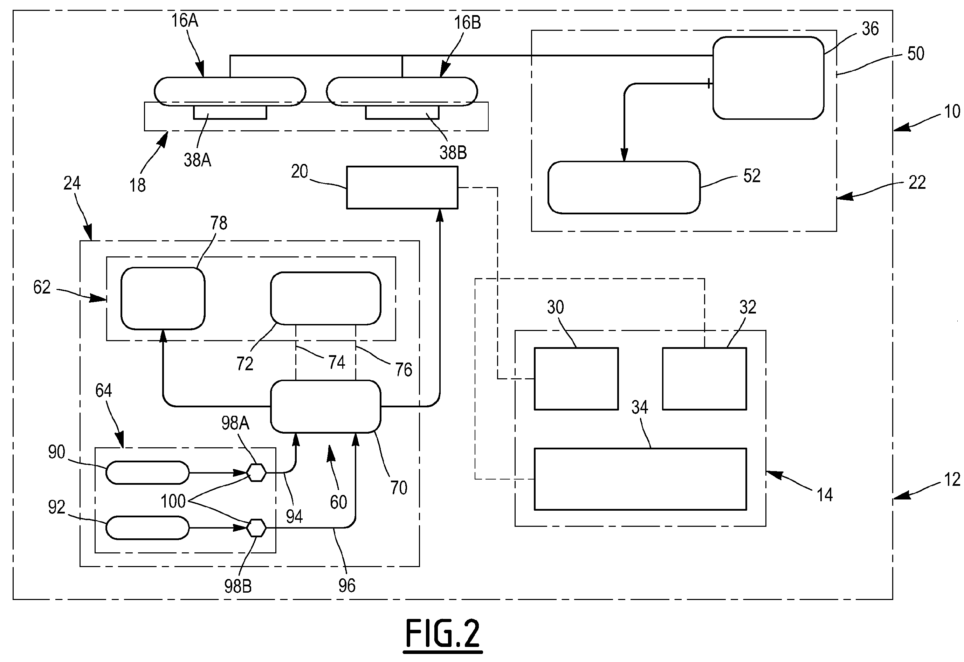

- la Figure 2 est une vue analogue à la Figure 1, dans une configuration active de production d'énergie par la pile;
- la Figure 3 est une vue en perspective et en coupe partielle d'un premier actionneur pyrotechnique présent dans l'ensemble de génération de secours dans la confirmation de veille illustrée sur la Figure 1 et
- la Figure 4 est une vue analogue à la Figure 3, dans la configuration active qui est illustrée sur la Figure 2.

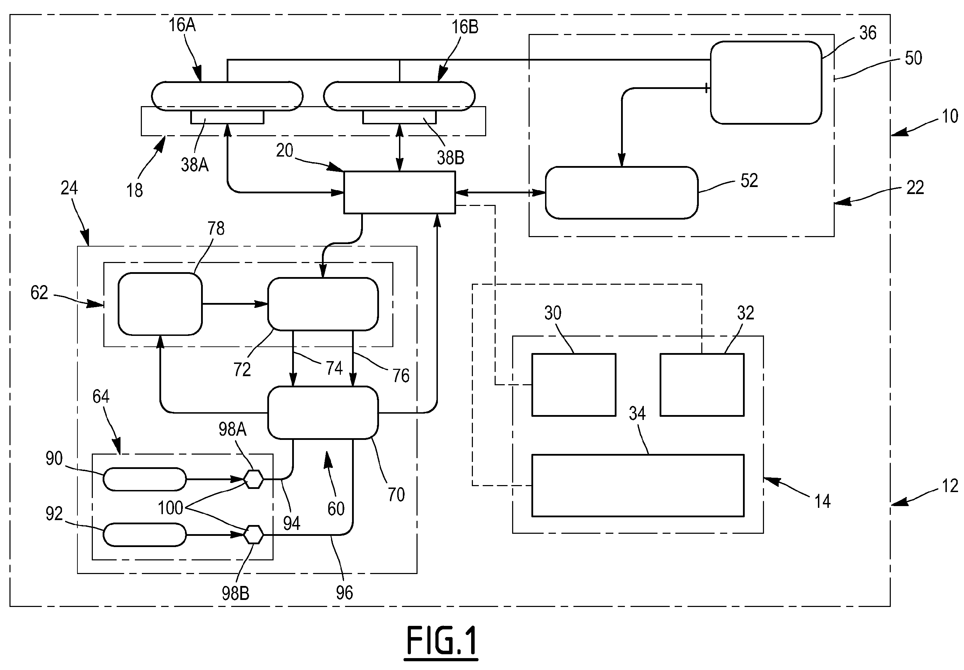

Un premier aéronef 10 selon l'invention est illustré par la Figure 1.

De manière connue, l'aéronef 10 comporte un fuselage 12 délimitant une enceinte 14 de réception d'occupants, d'équipements fonctionnels de l'aéronef et éventuellement de bagages et/ou de marchandises.

L'aéronef 10 comporte en outre au moins un moteur 16A, 16B, un ensemble principal 18 de génération d'énergie électrique accouplé à au moins un moteur 16A, 16B et un réseau électrique 20 raccordé à l'ensemble principal 18.

Avantageusement, la plateforme 10 comporte en outre un ensemble auxiliaire 22 de génération électrique. Elle comporte également un ensemble 24 de génération électrique de secours selon l'invention.

L'enceinte 14 comporte un cockpit 30 destiné à transporter un équipage pilotant l'aéronef 10, une cabine 32 destinée à transporter des passagers et/ou des marchandises, et une soute 34.

Le cockpit 30, la cabine 32, et la soute 34 sont raccordés électriquement au réseau électrique 20 pour l'alimentation électrique des équipements électriques qu'ils contiennent.

Chaque moteur 16A, 16B est destiné à la propulsion de l'aéronef 10, notamment pour permettre son décollage et son maintien en vol à l'écart du sol.

Dans l'exemple représenté sur la Figure 1, l'aéronef 10 comporte au moins deux moteurs 16A, 16B, le nombre de moteurs 16A, 16B pouvant être compris plus généralement entre 1 et 4.

Dans cet exemple, chaque moteur 16A, 16B est un turbo-réacteur comprenant une turbine entraînée en rotation par la combustion d'un combustible liquide (tel que du kérosène) pour engendrer une poussée.

A cet effet, chaque moteur 16A, 16B est raccordé à au moins un réservoir 36 de combustible liquide.

Le réseau électrique 20 est destiné à alimenter électriquement les ensembles fonctionnels de l'aéronef 10. Le réseau électrique 20 alimente notamment un calculateur de commande de vol, des pompes, des instruments de navigation, et des servitudes présentes dans le cockpit 30, dans la cabine 32 et/ou dans la soute 34.

Dans l'exemple représenté sur la Figure 1, l'ensemble principal 18 de génération électrique comporte un générateur 38A, 38B comportant au moins un rotor (non représenté) entraîné en rotation par la turbine d'un moteur 16A, 16B ou par un courant de gaz engendré par le moteur 16A, 16B. Le générateur 38A, 38B comporte un stator.

Le générateur 38A, 38B est ainsi apte à produire une énergie électrique lors de la rotation de la turbine du moteur 16A, 16B, au sol, ou en vol.

Chaque générateur 38A, 38B est raccordé électriquement au réseau électrique 20 pour fournir l'énergie électrique qu'il produit au réseau 20.

L'ensemble auxiliaire 22 est par exemple formé par un système autonome 50 de génération électrique, apte à engendrer une énergie électrique d'appoint indépendamment de chaque générateur électrique 38A, 38B accouplé à chaque moteur 16A, 16B. Le système autonome 50 est apte à engendrer une énergie électrique notamment lorsque chaque moteur 16A, 16B est à l'arrêt.

Le système 50 comporte un générateur auxiliaire 52, alimenté par du combustible liquide fourni par exemple par le réservoir 36, ou par un réservoir autonome (non représenté).

Le générateur auxiliaire 52 comporte généralement un arbre rotatif (non représenté) et une turbine de puissance apte à entraîner en rotation l'arbre rotatif sous l'effet d'un gaz comprimé dans une chambre de combustion alimentée par le combustible.

Un tel système 50 est par exemple décrit dans les demandes de brevet en France n° 11 01512 et n° 11 01511 de la Demanderesse.

L'ensemble auxiliaire 22 est ainsi apte à fournir de l'énergie électrique au réseau 20 indépendamment de l'énergie électrique fournie par l'ensemble principal 18, et notamment en l'absence d'énergie électrique fournie par l'ensemble principal 18, par exemple lorsque les moteurs 16A, 16B sont à l'arrêt ou en complément de ceux-ci.

Avantageusement, l'ensemble auxiliaire 22 est également apte à réaliser le conditionnement de l'atmosphère présente dans l'enceinte 14, tel que décrit dans les demandes précitées de la Demanderesse.

Selon l'invention, l'ensemble 24 de génération électrique de secours comporte un générateur de secours 60 destiné à produire une énergie électrique de secours pour alimenter le réseau électrique 20 en cas de panne du générateur principal 18 et/ou de l'ensemble auxiliaire 22.

L'ensemble 24 de secours comporte au moins une première source 62 d'alimentation du générateur de secours 60, destinée à être raccordée au réseau électrique 20 pour être alimentée électriquement par le réseau 20 et au moins une deuxième source 64 d'alimentation du générateur de secours propre à alimenter le générateur de secours 60 indépendamment du réseau électrique 20.

Comme on le verra plus bas, l'ensemble de secours 24 est pilotable entre une configuration inactive, une configuration intermédiaire de veille et une configuration active de production d'énergie électrique de secours.

Dans la configuration inactive, le générateur de secours 60 est inactif et ne produit aucune énergie électrique.

Dans la configuration intermédiaire de veille, la première source d'alimentation 62 est alimentée par le réseau électrique 20 pour activer le générateur de secours 60 afin de produire une énergie électrique de veille.

Dans la configuration active de production d'énergie, le générateur de secours 60 est alimenté par la deuxième source 64, indépendamment du réseau électrique 20, afin de produire une énergie électrique de secours alimentant le réseau électrique 20.

Dans l'exemple représenté sur la Figure 1, le générateur de secours 60 est formé par une pile à combustible 70.

De manière connue, la pile à combustible 70 reçoit un combustible réducteur gazeux et un combustible oxydant gazeux qui sont respectivement oxydés sur une première électrode et sur une deuxième électrode de la pile 70. L'oxydo-réduction du combustible réducteur et du combustible oxydant produit des électrons qui circulent de la première électrode vers la deuxième électrode. En général, les électrodes sont montées de part et d'autre d'une membrane échangeuse de protons ou sur une membrane à oxyde solide.

Le combustible réducteur est par exemple de l'hydrogène et le combustible oxydant est par exemple de l'oxygène.

La réaction entre les combustibles produit un fluide, notamment un liquide tel que l'eau.

La pile à combustible 70 est raccordée électriquement au réseau électrique 20.

La première source 62 comporte un électrolyseur 72 destiné à produire le combustible réducteur et le combustible oxydant à partir d'un fluide à électrolyser, un premier conduit 74 d'alimentation du combustible réducteur vers la pile 70 et un deuxième conduit 76 d'alimentation du combustible oxydant vers la pile 70. La première source 62 comporte en outre un réservoir 78 de fluide à électrolyser, tel qu'un réservoir d'eau et avantageusement, un conduit 80 de collecte du fluide récupéré dans la pile 70 pour l'acheminer vers le réservoir 78.

L'électrolyseur 72 est raccordé électriquement au réseau électrique 20. Dans la configuration intermédiaire de veille, lorsque l'électrolyseur est alimenté électriquement par le réseau 20, il est apte à électrolyser le fluide contenu dans le réservoir 78 pour former le combustible réducteur et le combustible oxydant et pour les acheminer en continu vers la pile 70 à travers respectivement le premier conduit 74 et le deuxième conduit 76.

La deuxième source 64 comporte un premier réservoir autonome 90 de combustible réducteur et un deuxième réservoir autonome 92 de combustible oxydant. Elle comporte en outre une troisième conduite 94 d'alimentation de la pile 70 en combustible réducteur et une quatrième conduite 96 d'alimentation de la pile 70 en combustible oxydant.

La deuxième source 64 comporte en outre sur chaque conduite 94, 96 un actionneur 98A, 98B normalement fermé dans la configuration inactive et dans la configuration de veille. L'actionneur 98A, 98B est propre à libérer la conduite 94, 96 dans la configuration active.

Avantageusement, chaque réservoir, 90, 92 est formé par une cartouche de gaz sous pression, la cartouche étant amovible pour former un réservoir d'appoint.

Avantageusement, les cartouches sont conditionnées sous forme d'un rack remplaçable.

Chaque réservoir 90, 92 contient une masse de gaz par exemple inférieure à 10 kg. Le gaz est par exemple maintenu à une pression supérieure à 70 bars.

La troisième conduite 94 raccorde le premier réservoir 90 à la pile 70. La quatrième conduite 96 raccorde le deuxième réservoir 92 à la pile 70.

Chaque actionneur 98A, 98B est normalement inactif. Il obture ainsi la conduite 94, 96 sur lequel il est monté et empêche le passage du gaz contenu dans le réservoir 90, 92 vers la pile 70 dans la configuration inactive et dans la configuration de veille.

Chaque actionneur 98A, 98B est activable, par exemple par un ordre énergétique pouvant être mécanique, photonique, pyrotechnique, thermique ou/et électrique pour ouvrir la conduite 94, 96 et permettre la circulation de combustible depuis le réservoir 90, 92 vers la pile 70.

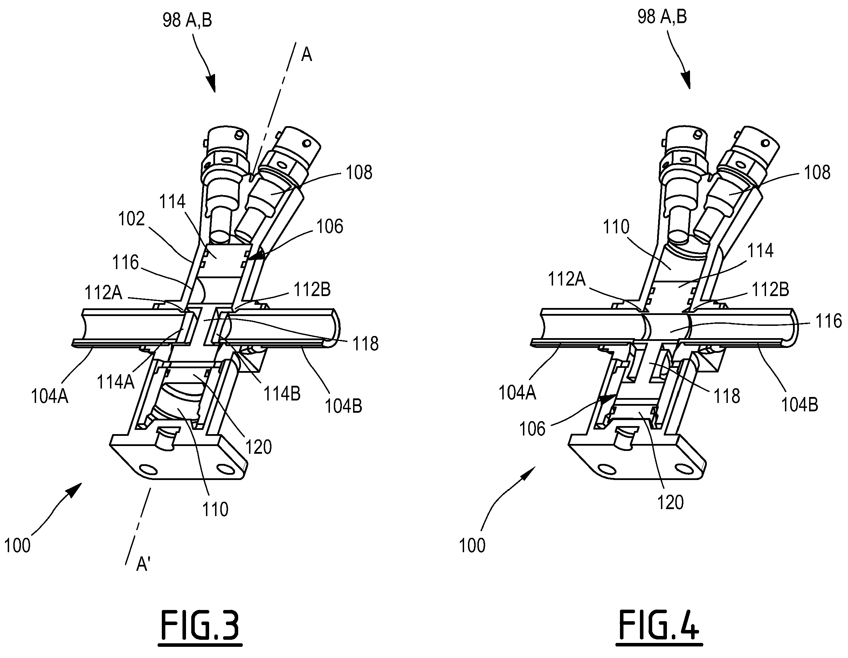

Dans un mode de réalisation particulier, chaque actionneur 98A, 98B est formé par une vanne pyrotechnique 100. Un exemple de vanne pyrotechnique 100 est illustré par la Figure 3 et 4.

La vanne 100 est activable depuis un état de repos dans lequel elle empêche le passage de fluide, vers un état activé dans lequel elle autorise le passage de fluide.

Comme illustré par la Figure 3, la vanne 100 comporte une chemise 102 recevant un premier tronçon amont 104A de tube raccordé à la conduite 94, 96 et un deuxième tronçon aval 104B de tube raccordé à la conduite 94, 96, les tronçons 104A, 104B étant disjoints.

La vanne 100 comporte en outre un piston 106 monté mobile dans la chemise 102 entre le premier tronçon 104A et le deuxième tronçon 104B, et au moins un ensemble 108 de déplacement du piston 106, sur réception d'un ordre énergétique d'activation de la vanne 100.

La chemise 102 délimite une cavité interne 110 de circulation du piston 106. Dans cet exemple la cavité 110 présente un axe central A-A'. Elle délimite deux ouvertures transversales 112A, 112B d'insertion des tronçons respectifs 104A, 104B dans la cavité 110.

Comme précisé plus haut, les tronçons 104A, 104B sont normalement disjoints. Ils s'étendent en saillie dans la cavité 110, en regard l'un de l'autre.

Le piston 106 est inséré entre les tronçons 104A, 104B. Chaque tronçon 104A, 104B présente une extrémité libre 114A, 114B qui est obturée lorsque la valve 100 est dans son état de repos.

Cette obturation est par exemple réalisée par un usinage partiel du tronçon 104A, 104B. Un bouchon est ainsi présent à chaque extrémité 114A, 114B. Les tronçons 104A, 104B sont inaptes à communiquer l'un avec l'autre dans l'état de repos.

Le piston 106 comporte une tête 114, une partie intermédiaire 116 creuse destinée à raccorder les tronçons 104A, 104B entre eux et une partie inférieure 118 de découpe des extrémités 114A, 114B des tronçons 104A, 104B. Le piston 106 comporte en outre une partie d'extrémité 120 pour le guidage du piston dans la cavité 110.

Comme illustré par les Figures 3 et 4, le piston 106 est déplaçable en translation dans la cavité 110 entre une position de repos, représentée sur la Figure 3 et une position active de mise en communication du premier tronçon 104A avec le deuxième tronçon 104B représentée sur la Figure 4.

Dans la position de repos, la partie creuse 116 est située axialement à l'écart des tronçons 104A, 104B. Les tronçons 104A, 104B sont reçus dans des logements ménagés dans la partie de découpe 118. Ils sont obstrués à leurs extrémités libres 114A, 114B.

La tête 114 est située relativement plus proche de l'ensemble de déplacement 108.

Dans la position active, le piston 106 a été déplacé à l'écart de l'ensemble de déplacement 108. La partie de découpe 118 a découpé les extrémités libres 114A, 114B pour placer la partie creuse 116 entre les tronçons 104A, 104B. Les tronçons 104A, 104B sont alors en communication fluidique l'un avec l'autre à travers la partie creuse 16.

L'ensemble de déplacement 108 est par exemple formé par un générateur d'un gaz sous pression tel qu'une étoupille, un générateur de gaz, ou un détonateur pyrotechnique.

L'ensemble de déplacement 108 est activé par un ordre énergétique. Sur réception de l'ordre énergétique, l'ensemble de déplacement 108 est apte à produire un gaz sous pression dans la cavité 110 en amont de la tête 114 et déplacer ainsi le piston 106.

Le fonctionnement de l'aéronef 10 et de l'ensemble de génération de secours 24 vont maintenant être décrits.

Initialement, au sol, lorsque l'aéronef 10 est au parking, l'ensemble principal 18 de génération électrique, l'ensemble auxiliaire 22 et l'ensemble de secours 24 sont inactifs.

Puis, avant le démarrage d'un moteur 18A, 18B, l'ensemble auxiliaire 22 est utilisé pour produire de l'énergie électrique fournie au réseau 20. A cet effet, du combustible liquide est fourni au générateur auxiliaire 52 depuis le réservoir 36. La combustion du combustible dans une chambre de combustion (non représentée) entraîne un arbre rotatif qui produit de l'énergie électrique.

Lorsqu'au moins un moteur 16A, 16B est démarré, le moteur 16A, 16B entraîne en rotation le rotor du générateur 38A, 38B auquel il est accouplé. Ceci permet à l'ensemble principal 18 de produire de l'énergie électrique. Cette énergie électrique est transmise au réseau 20 pour alimenter les différents ensembles fonctionnels de l'appareil de l'aéronef 10 présent dans le cockpit 30, dans la cabine 32, et/ou dans la soute 34.

Par ailleurs, avant le décollage le décollage de l'aéronef 10 ou une fois l'aéronef 10 en vol, le réseau électrique 20 alimente l'ensemble de secours 24 pour faire passer le générateur de secours 60 de sa configuration inactive à sa configuration intermédiaire de veille. A cet effet, une énergie électrique de veille est fournie à la première source 62 pour permettre l'alimentation du générateur de secours 60.

Dans le cas où le générateur 60 est une pile à combustible 70, le réseau électrique 20 fournit une énergie électrique à l'électrolyseur 72. L'électrolyseur 72 reçoit du fluide présent dans le réservoir 78 et produit, par électrolyse de ce fluide, du combustible gazeux réducteur et du combustible gazeux oxydant. Ces combustibles sont respectivement convoyés par les conduites 74, 76 vers la pile à combustible 70.

Une réaction d'oxydo-réduction se produit alors dans la pile 70 entre les combustibles oxydants et réducteurs pour engendrer un courant d'électrons qui est transmis vers le réseau électrique 20 de l'appareil. Le liquide obtenu est convoyé vers le réservoir 78 à travers la conduite 80.

Dans la configuration de veille, la deuxième source 64 est inactive et les actionneurs 98A, 98B occupent leur état de repos empêchant le gaz présent dans les réservoirs 90, 92 d'alimenter la pile 70.

Avantageusement, le générateur de secours 60 produit de l'énergie électrique de veille en continu durant le vol, ce qui garantit que le générateur 60 fonctionne, et est maintenu en température, par exemple à une température supérieure à 60°C, ce qui assure son maintien en condition opérationnelle. Le fonctionnement en continu du système de génération de secours 60 permet également de s'affranchir du problème des pannes dormantes pouvant potentiellement affecter les systèmes ne fonctionnant pas en continu.

La puissance électrique fournie par le générateur secondaire 60 est cependant maintenue au minimum, par exemple en étant inférieure à 500 W pour limiter la quantité d'énergie électrique que doit fournir le réseau électrique 20 pour alimenter la première source 62.

De plus, la puissance électrique de veille engendrée par la pile 70 étant restituée au réseau électrique 20, le rendement global est amélioré.

En cas de panne électrique affectant le générateur principal 18 et le générateur auxiliaire 22, les actionneurs pyrotechniques 98A, 98B passent de leur état inactif à leur état activé.

Un ordre énergétique est transmis à l'ensemble de déplacement 108 du piston 106. Cet ordre énergétique active l'ensemble de déplacement 108 qui produit un gaz de déplacement du piston 106 dans la cavité 110. Le piston 106 se déplace alors dans la cavité 110 et met en communication fluidique les tronçons 104A, 104B, avantageusement en découpant les extrémités 114A, 114B de ces tronçons.

Dans la configuration active, la première source 62 est déconnectée du réseau électrique 20. L'électrolyseur 72 est alors rendu inactif.

Le combustible oxydant et le combustible réducteur présents respectivement dans les réservoirs 92, 90 circulent à travers les conduites 94, 96 vers la pile 70 pour alimenter la pile 70.

Le générateur de secours 60 produit alors une énergie électrique de puissance supérieure à celle de l'énergie électrique de veille produite dans la configuration de veille, pour alimenter le réseau électrique 20 et maintenir les fonctionnalités essentielles d'instrumentation et de commande de l'aéronef. Cette puissance est par exemple supérieure à 1 kW.

La pile à combustible 70 étant maintenue en température en permanence, dans la configuration intermédiaire de veille, elle peut basculer directement dans la configuration active, avec un temps de mise en service très faible, par exemple inférieur à 10 ms, en raison du temps d'activation des vannes pyrotechniques et du temps de circulation des fluides jusque dans la pile à combustible 70.

Il n'y a cependant pas d'interruption du fonctionnement de la pile à combustible, en raison du fait que pendant ces 10 ms, il existe une arrivée de gaz résiduelle provenant de l'électrolyseur, même s'il a été rendu inactif.

Il n'est donc pas nécessaire de prévoir des batteries de grande capacité pour assurer une continuité de fourniture d'énergie électrique au réseau 20. La batterie avion est suffisante et est uniquement utilisée pour éventuellement compléter l'alimentation fournie par la pile à combustible dans le cas où celle-ci ne serait pas en mesure de fournir instantanément la totalité de l'énergie demandée, uniquement en cas de forts appels de charge.

En outre, la première source 62 produisant tout le combustible nécessaire à l'alimentation de la pile 70 dans sa configuration de veille, il n'est pas nécessaire de prévoir des réservoirs 90, 92 de grand volume pour les réactifs servant à alimenter le générateur de secours 60. Ces réactifs sont disponibles en permanence en étant produit sur place dans l'aéronef 10.

Ceci réduit la masse de l'aéronef 10 et évite qu'un remplissage en combustible soit effectué avant chaque vol. Dans l'exemple d'une pile à oxygène et hydrogène, le seul fluide nécessaire au fonctionnement continu du système, dans la configuration intermédiaire est de l'eau.

De plus, la deuxième source 64 est utilisable uniquement en cas d'urgence et permet de produire une énergie suffisante en cas d'urgence afin de ramener l'aéronef 10 vers le sol. Ainsi, la pile à combustible 70 peut être dimensionnée pour ce mode d'extrême secours, ce qui évite d'augmenter sa masse notamment sur des aéronefs 10 de moindre taille.

L'utilisation de valves pyrotechniques 100 renforce la fiabilité de l'ensemble de secours 24. Le bilan énergétique global de l'ensemble de secours 24 reste sensiblement inaltéré, puisque l'électrolyseur 72 est maintenu inactif au sol, et puisqu'il produit une partie (par exemple au moins 30%) de l'énergie électrique qui est nécessaire à son fonctionnement.

L'utilisation de réservoirs 90, 92 sous forme de cartouches ou/et de racks simplifie grandement les opérations de maintenance.

Les valeurs numériques indiquées dans la présente description sont données à titre d'exemple appliqué au domaine des avions d'affaires (pour des masses maximales au décollage inférieures à 100 000 livres). Ces valeurs sont à adapter en fonction du type, du poids et de la taille de l'aéronef embarquant l'ensemble de génération électrique de secours selon l'invention.

L'ensemble de secours 24 selon l'invention fournit donc un système beaucoup plus sûr que les turbines mécanique de secours, tout en présentant une maintenance minimale et les conditions d'opérations très simples.

## Revendications

1. Ensemble (24) de génération électrique de secours pour un aéronef (10), comprenant un générateur électrique de secours (60), destiné à être raccordé à un réseau électrique (20) de l'aéronef,
l'ensemble (24) de génération électrique de secours étant pilotable entre une configuration inactive de repos dans laquelle le générateur électrique de secours (60) est inactif et une configuration active de production d'énergie dans laquelle le générateur électrique de secours (60) délivre une énergie électrique de secours au réseau électrique (20), sans être alimenté électriquement par le réseau électrique (20),
l'ensemble (24) de génération électrique de secours étant apte à être placé dans une configuration intermédiaire de veille, pour que le générateur électrique de secours (60) produise une énergie électrique de veille de puissance inférieure à la puissance délivrée par le générateur électrique de secours (60) dans la configuration active,
l'ensemble de génération électrique de secours (24) comportant une première source (62) d'alimentation du générateur électrique de secours (60) permettant au générateur électrique de secours (60) de produire une énergie électrique de veille,
le générateur électrique de secours (60) comportant une pile à combustible (70), **caractérisé en ce que** la première source d'alimentation (62) est destinée à être alimentée électriquement par le réseau électrique (20) dans la configuration intermédiaire de veille,
et **en ce que** la première source d'alimentation (62) comporte un électrolyseur (72) propre à engendrer au moins un combustible gazeux destiné à alimenter la pile à combustible (70) sur réception d'une énergie électrique provenant du réseau électrique (20).

2. Ensemble (24) selon la revendication 1, **caractérisé en ce qu'**il comporte une deuxième source (64) d'alimentation du générateur électrique de secours (60), la deuxième source d'alimentation (64) étant apte à alimenter le générateur électrique de secours (60) sans recevoir d'énergie électrique du réseau électrique (20) de l'aéronef.

3. Ensemble (24) selon la revendication 2, **caractérisé en ce que** la deuxième source (64) comporte au moins un réservoir (90, 92) de combustible gazeux d'alimentation de la pile à combustible (70).

4. Ensemble (24) selon l'une quelconque des revendications 2 ou 3, **caractérisé en ce que** la deuxième source (64) est raccordée au générateur d'énergie électrique de secours (60) par l'intermédiaire d'un actionneur pyrotechnique (98A, 98B), l'actionneur pyrotechnique (98A, 98B) étant avantageusement activable par un ordre énergétique mécanique, photonique, pyrotechnique, thermique ou/ électrique.

5. Ensemble (24) selon la revendication 4, **caractérisé en ce que** l'actionneur pyrotechnique comporte une vanne pyrotechnique (100).

6. Ensemble (24) selon la revendication 5, **caractérisé en ce que** la vanne pyrotechnique (100) comporte un premier tronçon de tube (104A) obturé présentant une première extrémité (114A), et un deuxième tronçon de tube (104B) obturé à une extrémité (114B) située en regard de la première extrémité (114A), la vanne pyrotechnique (100) comportant un piston (106) déplaçable entre une position de repos inactive dans laquelle les extrémités (114A, 114B) sont obturées, et une position active de mise en communication du premier tronçon de tube (104A) avec le deuxième tronçon de tube (104B).

7. Aéronef (10), **caractérisé en ce qu'**il comporte :
- un réseau électrique (20) ;
- au moins un ensemble principal (18) de génération électrique accouplé à un moteur (16A, 16B) de propulsion de l'aéronef (10) pour fournir une énergie électrique au réseau électrique (20) lorsque le moteur de propulsion (16A, 16B) est actif ;
- un ensemble (24) de génération électrique de secours selon l'une quelconque des revendications précédentes, le générateur électrique de secours (60) étant raccordé au réseau électrique (20) de l'aéronef.

8. Aéronef (10) selon la revendication 7, **caractérisé en ce qu'**il comporte un ensemble auxiliaire (22) de génération électrique comportant un générateur auxiliaire (50) apte à fonctionner indépendamment du ou de chaque moteur (16A, 16B) de propulsion de l'aéronef et de l'ensemble de génération électrique de secours (24), le générateur auxiliaire (50) étant alimenté par un réservoir (36) de combustible liquide présent dans l'aéronef.

9. Procédé de génération électrique dans un aéronef (10) comportant les étapes suivantes :
- fourniture d'un ensemble (24) de génération électrique de secours selon l'une quelconque des revendications 1 à 6, le générateur d'énergie électrique de secours (60) étant raccordé au réseau électrique (20) de l'aéronef (10) ;
- lors d'une phase de vol normal de l'aéronef (10), opération de l'ensemble de génération électrique (24) dans sa configuration intermédiaire de veille, l'ensemble de génération électrique (24) étant alimenté électriquement par le réseau électrique (20) de l'aéronef, le générateur électrique de secours (60) produisant une énergie électrique de veille délivrée au réseau électrique (20) ;
- lors d'une phase d'urgence, pilotage de l'ensemble de génération électrique de secours (24) depuis sa configuration de veille vers sa configuration active de production d'énergie dans laquelle il fournit une énergie électrique de secours au réseau électrique (20), sans recevoir d'énergie électrique du réseau électrique (20), l'énergie électrique de secours étant de puissance supérieure à celle de l'énergie électrique de veille produite dans la configuration intermédiaire de veille.
l'ensemble de génération électrique de secours (24) comportant une première source (62) d'alimentation du générateur électrique de secours (60) propre à alimenter le générateur électrique de secours (60) afin de produire une énergie électrique de veille,
dans lequel dans la configuration intermédiaire de veille, la première source d'alimentation (62) est alimentée électriquement par le réseau électrique (20),
dans lequel le générateur électrique de secours (60) comporte une pile à combustible (70), la pile à combustible (70) produisant une énergie électrique de veille dans la configuration intermédiaire,
et dans lequel la première source (62) comporte un électrolyseur (72) propre à engendrer au moins un combustible gazeux destiné à alimenter la pile à combustible (70) sur réception d'une énergie électrique provenant du réseau électrique (20).

10. Procédé selon la revendication 9, **caractérisé en ce que** l'ensemble de génération électrique de secours (24) comporte une deuxième source (64) d'alimentation électrique de secours (60) du générateur, et **en ce que**, lors de la phase d'urgence, la deuxième source d'alimentation (62) alimente le générateur électrique de secours (60) sans recevoir d'énergie électrique du réseau électrique (20).

## Patentansprüche

1. Notstrom-Erzeugungs-Einrichtung (24) für ein Luftfahrzeug (10), aufweisend einen Notstromgenerator (60), der dazu bestimmt ist, mit einem elektrischen Netz (20) des Luftfahrzeugs verbunden zu sein,
wobei die Notstrom-Erzeugungs-Einrichtung (24) zwischen einer inaktiven Ruhe-Konfiguration, in welcher der Notstromgenerator (60) inaktiv ist, und einer aktiven Energieproduktions-Konfiguration steuerbar ist, in welcher der Notstromgenerator (60) eine Notstromenergie an das elektrische Netz (20) liefert, ohne von dem elektrischen Netz (20) elektrisch versorgt zu werden,
wobei die Notstrom-Erzeugungs-Einrichtung (24) in der Lage ist, in eine zwischenliegende Bereitschafts-Konfiguration gesetzt zu werden, worin der Notstromgenerator (60) eine elektrische Bereitschafts-Energie einer Leistung erzeugt, die kleiner ist als die Leistung, die von dem Notstromgenerator (60) in der aktiven Konfiguration geliefert wird,
wobei die Notstrom-Erzeugungs-Einrichtung (24) eine erste Quelle (62) zur Versorgung des Notstromgenerators (60) aufweist, die es dem Notstromgenerator (60) erlaubt, eine elektrische Bereitschafts-Energie zu produzieren,
wobei der Notstromgenerator (60) eine Brennstoffzelle (70) aufweist,
**dadurch gekennzeichnet, dass** die erste Versorgungsquelle (62) dazu bestimmt ist, in der zwischenliegenden Bereitschafts-Konfiguration von dem elektrischen Netz (20) elektrisch versorgt zu werden, und
dass die erste Versorgungsquelle (62) eine Elektrolysezelle (72) aufweist, die in der Lage ist, wenigstens einen gasförmigen Brennstoff zu erzeugen, der dazu bestimmt ist, der Brennstoffzelle (70) zugeführt zu werden, auf den Erhalt von elektrischer Energie, die von dem elektrischen Netz (20) stammt.

2. Einrichtung (24) gemäß Anspruch 1, **dadurch gekennzeichnet, dass** sie eine zweite Quelle (64) zur Versorgung des Notstromgenerators (60) aufweist, wobei die zweite Versorgungsquelle (64) in der Lage ist, den Notstromgenerator (60) zu versorgen, ohne elektrische Energie von dem elektrischen Netz (20) des Luftfahrzeugs zu erhalten.

3. Einrichtung (24) gemäß Anspruch 2, **dadurch gekennzeichnet, dass** die zweite Quelle (64) wenigstens ein Reservoir (90, 92) von gasförmigem Brennstoff zur Versorgung der Brennstoffzelle (70) aufweist.

4. Einrichtung (24) gemäß irgendeinem der Ansprüche 2 oder 3, **dadurch gekennzeichnet, dass** die zweite Quelle (64) mit dem Notstromgenerator (60) verbunden ist über die Zwischenschaltung eines pyrotechnischen Betätigungsorgans (98A, 98B), wobei das pyrotechnische Betätigungsorgan (98A, 98B) vorteilhafterweise aktivierbar ist durch einen energetischen, mechanischen, photonischen, pyrotechnischen, thermischen oder/ elektrischen Befehl.

5. Einrichtung (24) gemäß Anspruch 4, **dadurch gekennzeichnet, dass** das pyrotechnische Betätigungsorgan ein pyrotechnisches Ventil (100) aufweist.

6. Einrichtung (24) gemäß Anspruch 5, **dadurch gekennzeichnet, dass** das pyrotechnische Ventil (100) aufweist einen ersten geschlossenen Rohrabschnitt (104A), der ein erste Ende (114A) hat, und einen zweiten geschlossenen Rohrabschnitt (104B), der an einem Ende (114B) geschlossen ist, das dem ersten Ende (114A) gegenüberliegend angeordnet ist, wobei das pyrotechnische Ventil (100) einen Kolben (106) aufweist, der verlagerbar ist zwischen einer inaktiven Ruheposition, in welcher die Enden (114A, 114B) geschlossen sind, und einer aktiven Position des in Kommunikation Bringens des ersten Rohrabschnitts (104A) mit dem zweiten Rohrabschnitt (104B).

7. Luftfahrzeug (10), **dadurch gekennzeichnet, dass** es aufweist:
- ein elektrisches Netz (20),
- wenigstens eine Stromerzeugungs-Haupteinrichtung (18), die mit einem Antriebsmotor (16A, 16B) des Luftfahrzeugs (10) verbunden ist, um elektrische Energie an das elektrische Netz (20) zu liefern, wenn der Antriebsmotor (16A, 16B) aktiv ist,
- eine Notstrom-Erzeugungs-Einrichtung (24) gemäß irgendeinem der vorhergehenden Ansprüche, wobei der Notstromgenerator (60) mit dem elektrischen Netz (20) des Luftfahrzeugs verbunden ist.

8. Luftfahrzeug (10) gemäß Anspruch 7, **dadurch gekennzeichnet, dass** es aufweist eine Hilfseinrichtung (22) zur Erzeugung elektrischer Energie, die aufweist einen Hilfsgenerator (50), der in der Lage ist, unabhängig von dem oder jedem Antriebsmotor (16A, 16B) des Luftfahrzeugs und von der Notstrom-Erzeugungs-Einrichtung (24) zu arbeiten, wobei der Hilfsgenerator (50) von einem Reservoir (36) von flüssigem Brennstoff versorgt wird, der im Luftfahrzeug vorliegt.

9. Verfahren zur Erzeugung elektrischer Energie in einem Luftfahrzeug (10), aufweisend die folgenden Schritte:
- Bereitstellung einer Notstrom-Erzeugungs-Einrichtung (24) gemäß irgendeinem der Ansprüche 1 bis 6, wobei der Notstromgenerator (60) mit dem elektrischen Netz des Luftfahrzeugs (10) verbunden ist,
- während einer Phase normalen Flugs des Luftfahrzeugs (10), Betrieb der Strom-Erzeugungs-Einrichtung (24) in ihrer zwischenliegenden Bereitschafts-Konfiguration, wobei die Strom-Erzeugungs-Einrichtung (24) von dem elektrischen Netz (20) des Luftfahrzeugs elektrisch versorgt wird, wobei der Notstromgenerator (60) elektrische Bereitschafts-Energie produziert, die dem elektrischen Netz (20) zugeführt wird,
- während einer Not-Phase, Steuern der Notstrom-Erzeugungs-Einrichtung (24) von ihrer Bereitschafts-Konfiguration aus zu ihrer aktiven Energieproduktions-Konfiguration hin, in welcher sie Notstromenergie an das elektrische Netz (20) liefert, ohne elektrische Energie von dem elektrischen Netz (20) zu erhalten, wobei die Notstromenergie eine Leistung hat, die größer ist als jene der elektrischen Bereitschafts-Energie, die in der zwischenliegenden Bereitschafts-Konfiguration produziert wird.
wobei die Notstrom-Erzeugungs-Einrichtung (24) eine erste Quelle (62) zur Versorgung des Notstromgenerators (60) aufweist, die in der Lage ist, den Notstromgenerator (60) zu versorgen, um eine elektrische Bereitschafts-Energie zu produzieren,
wobei in der zwischenliegenden Bereitschafts-Konfiguration die erste Versorgungsquelle (62) von dem elektrischen Netz (20) elektrisch versorgt wird,
wobei der Notstromgenerator (60) eine Brennstoffzelle (70) aufweist, wobei die Brennstoffzelle (70) eine elektrische Bereitschafts-Energie in der zwischenliegenden Konfiguration produziert,
und wobei die erste Versorgungsquelle (62) eine Elektrolysezelle (72) aufweist, die in der Lage ist, wenigstens einen gasförmigen Brennstoff zu erzeugen, der dazu bestimmt ist, der Brennstoffzelle (70) zugeführt zu werden, auf den Erhalt von elektrischer Energie, die von dem elektrischen Netz (20) stammt.

10. Verfahren gemäß Anspruch 9, **dadurch gekennzeichnet, dass** die Notstrom-Erzeugungs-Vorrichtung (24) eine zweite Quelle (64) zur Versorgung des Notstromgenerators (60) aufweist, und dass, während der Not-Phase, die zweite Versorgungsquelle (62) den Notstromgenerator (60) versorgt, ohne elektrische Energie von dem elektrischen Netz (20) zu erhalten.

## Claims

1. An emergency electric power generation assembly (24) for an aircraft (10), comprising an emergency electricity generator (60), intended to be connected to an electric network (20) of the aircraft,
the emergency electricity generator assembly (24) being controllable between an inactive rest configuration in which the emergency electricity generator (60) is inactive and an active configuration for producing energy in which the emergency electricity generator (60) delivers emergency electric energy to the electric network (20) without being electrically powered by the electric network (20),
the emergency electric power generation assembly (24) being able to be placed in an intermediate standby configuration, so that the emergency electricity generator (60) produces standby electric energy with a power of less than the power delivered by the emergency electricity generator (60) in the active configuration, the emergency electricity generator assembly (24) including a first source (62) for supplying the emergency electricity generator (60) allowing the emergency electricity generator (60) to produce standby electric energy, the emergency electricity generator including a fuel cell (70), **characterized in that** the first supply source (62) is for being electrically powered by the electric network (20) in the intermediate standby configuration, and **in that** the first supplying source (62) includes an electrolyzer (72) able to generate at least one gas fuel intended for feeding the fuel cell (70) upon receiving electric energy from the electric network (20).

2. The assembly (24) according to claim 1, **characterized in that** it includes a second source (64) for supplying the emergency electricity generator (60), the second supply source (64) being able to supply the emergency electricity generator (60) without receiving any electric energy from the electric network (20) of the aircraft.

3. The assembly (24) according to claim 2, **characterized in that** the second source (64) includes at least one gas fuel tank (90, 92) for feeding the fuel cell (70).

4. The assembly (24) according to any of claims 2 or 3, **characterized in that** the second source (64) is connected to the emergency electric energy generator (60) via a pyrotechnic actuator (98A, 98B), the pyrotechnic actuator (98A, 98B) being advantageously able to be activated by a mechanical, photonic, pyrotechnic, thermal or electric, energy command.

5. The assembly (24) according to claim 4, **characterized in that** the pyrotechnic actuator includes a pyrotechnic valve (100).

6. The assembly (24) according to claim 5, **characterized in that** the pyrotechnic valve (100) includes a first obturated tube segment (104A) having a first end (114A), and a second tube segment (104B) obturated at one end (114B) located facing the first end (114A), the pyrotechnic valve (100) including a piston (106) which may be displaced between an inactive rest position in which the ends (114A, 114B) are obturated, and an active position for putting the first tube segment (104A) in communication with the second tube segment (104B).

7. An aircraft (10) **characterized in that** it includes:
- an electric network (20);
- at least one main electricity generator assembly (18) coupled with a propulsion engine (16A, 16B) of the aircraft (10) for providing electric energy to the electric network (20) when the propulsion engine (16A, 16B) is active;
- an emergency electric power generation assembly (24) according to any of the preceding claims, the emergency electricity generator (60) being connected to the electric network (20) of the aircraft.

8. The aircraft (10) according to claim 7, **characterized in that** it includes an auxiliary electricity generator assembly (22) including an auxiliary generator (50) capable of operating independently of said or each propulsion engine (16A, 16B) of the aircraft and of the emergency electric power generation assembly (24), the auxiliary generator (50) being fed by a liquid fuel tank (36) present in the aircraft.

9. A method for generating electricity in an aircraft (10) including the following steps:
- providing an emergency electric power generation assembly (24) according to any of claims 1 to 6, the emergency electric energy generator (60) being connected to the electric network (20) of the aircraft (10);
- during a normal flight phase of the aircraft (10), operating the electricity generator assembly (24) in its intermediate standby configuration, the electricity generator assembly (24) being electrically powered by the electric network (20) of the aircraft, the emergency electricity generator (60) producing standby electric energy delivered to the electric network (20);
- during an emergency phase, controlling the emergency electric power generation assembly (24) from its standby configuration to its active configuration for producing energy in which it provides emergency electric energy to the electric network (20), without receiving any electric energy from the electric network (20), the emergency electric energy being of a power greater than that of the standby electric energy produced in the intermediate standby configuration,
the emergency electric power generation assembly (24) including a first source (62) for supplying the emergency electricity generator (60), able to power the emergency electricity generator (60) in order to produce standby electric energy,
in which, in the intermediate standby configuration, the first supply source (62) is electrically powered by the electric network (20),
in which, the emergency electricity generator (60) includes a fuel cell (70), the fuel cell (70) producing standby electric energy in the intermediate configuration,
and in which the first source (62) comprise an electrolyzer (72) able to generate at least one gas fuel intended for feedings the fuel cell (70) upon receiving electric emergency from the electric network (20).

10. The method according to claim 9, **characterized in that** the emergency electric power generation assembly (24) includes a second emergency source (64) for electrically powering (60) the generator, and **in that**, during the emergency phase, the second supply source (62) supplies the emergency electricity generator (60) without receiving any electric energy from the electric network (20).
